# EUROPÄISCHE PATENTANMELDUNG

(11) **EP 4 488 544 A1**
(43) Veröffentlichungstag der Anmeldung: **08.01.2025**
(21) Anmeldenummer: 24186219.2
(22) Anmeldetag: 03.07.2024
(51) Int. Cl.: F16H 1/06, F16H 1/08, F16H 57/04

(54) **STIRNRADGETRIEBE MIT KÜHLVORRICHTUNG**

(30) Priorität: 05.07.2023 DE 102023117685
(71) Anmelder: Voith Patent GmbH, 89522 Heidenheim (DE)
(72) Erfinder: Wittmann, John Patrick, 91088 Bubenreuth (DE); Majer, Andreas, 89542 Herbrechtingen (DE); Rudolph, Ralph, 88316 Isny (DE); Schips, Rainer, 73479 Ellwangen (DE); STOLZ, Tobias, 74589 Satteldorf (DE); Spelsberg-Korspeter, Gottfried, 74523 Schwäbisch Hall (DE)
(74) Vertreter: Voith Patent GmbH - Patentabteilung

(57) **Zusammenfassung**

Stirnradgetriebe 1, umfassend zumindest zwei Stirnräder 2, die über eine Verzahnung 5 kämmend miteinander in Eingriff 6 stehen, umfassend zumindest ein Innengehäuse 10, dass mittels einer Hüllwand 11 zumindest einen Teil der Stirnräder 2 in Umfangsrichtung und in Richtung der Drehachsen 7,8 umschließt, wobei zwischen Innengehäuse 10 und den Stirnrädern 2 ein Ringspalt 12 ausgebildet wird wobei das Innengehäuse 10 zumindest eine Öffnung 13 aufweist, das Innengehäuse 10 zumindest den Großteil der Stirnräder 2 umschließt und dass Stirnradgetriebe 1 eine Abstreifvorrichtung 30 umfasst, wobei die Abstreifvorrichtung 30 in Rotationsrichtung 40 vor dem Eingriffs 6 der Stirnräder 2 angeordnet ist, und ausgeführt ist Schmier- oder Kühlmittel 9 und Luft aus dem Ringspalt 11 aufzunehmen und aus dem Innengehäuse 10 durch die Öffnung 13 abzuführen.

## Beschreibung

Die Erfindung betrifft ein Stirnradgetriebe, umfassend zumindest zwei Stirnräder, die über eine Verzahnung kämmend miteinander in Eingriff stehen, umfassend zumindest ein Innengehäuse, dass mittels einer Hüllwand zumindest einen Teil der Stirnräder in Umfangsrichtung und in Richtung der Drehachsen umschließt, wobei zwischen Innengehäuse und den Stirnrädern ein Ringspalt ausgebildet wird

Aus dem Stand der Technik ist die EP 3 368 797 B1 bekannt, die ein Stirnradgetriebe mit zwei verzahnten Stirnrädern zeigt, die mit einem Innengehäuse abgeschirmt sind, wobei Verwirbelungen von Luft-Öl-Gemischen im Inneren des Gehäuses des Stirnradgetriebes vermindert werden. Eine Kühlung der Stirnräder erfolgt maßgeblich jedoch über das Innengehäuse.

Die Aufgabe der Erfindung ist es, eine effektive Kühlung der Stirnräder in einem Stirnradgetriebe zu ermöglichen und gleichzeitig durch eine optimierte Strömungsführung Reibungsverluste zu reduzieren und ein besonders effizientes Stirnradgetriebe bereitzustellen.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen.

Weiterhin wird die Aufgabe erfindungsgemäß gelöst, wobei das Innengehäuse 10 in einem Bereich, in Rotationsrichtung 40 nach dem Eingriff 6, zumindest zwei Öffnungen 13 umfasst, wobei das Stirnradgetriebe 1 zumindest zwei Kühlvorrichtung 20 umfasst, wobei die Kühlvorrichtungen 20 ausgeführt sind Schmier- und/oder Kühlmittel 9 durch die Öffnungen 13 auf die Verzahnung 5 zumindest eines der Stirnräder 2 aufzubringen, wobei zumindest eine Kühlvorrichtung 20 ausgeführt ist Kühlmittel 9 in den Ausgriff 6 der Verzahnung 5 einzubringen.

Es hat sich überraschend gezeigt, dass ein energetisch besonders effizienter Betrieb des Stirnradgetriebes ermöglicht wird, wenn an zwei oder mehr Stellen Schmier- und/oder Kühlmittel in das Innengehäuse eingebracht wird. Weiterhin kann an den Öffnungen voreilhaft überschüssiges Schmier- und/oder Kühlmittel aus dem Innengehäuse austreten und so eine kontrollierte gleichmäßige Schmier- und/oder Kühlmittelströmung erreicht werden. Dies führt zu geringerer interner Reibung und zu einer besseren Energieeffizienz des Stirnradgetriebes.

Weiterhin vorteilhaft ist ein Stirnradgetriebe, wobei Innengehäuse zumindest drei Öffnungen umfasst, wobei die Öffnungen ausgeführt sind einen Austausch von Schmier- und/oder Kühlmittel zu ermöglichen. In die Öffnungen wird dabei vorteilhaft je mit einer Kühlvorrichtung Schmier- und/oder Kühlmittel eingebracht oder eingedüst. Weiterhin sind die Öffnungen derart ausgeführt, dass überschüssiges, erwärmtes Kühlmittel aus dem Innengehäuse austreten kann. Es hat sich als besonders vorteilhaft gezeigt,

Weiterhin vorteilhaft ist ein Stirnradgetriebe, wobei das Innengehäuse in einem Bereich in Rotationsrichtung nach dem Eingriff, eine Öffnung 13 umfasst, wobei das Stirnradgetriebe eine Kühlvorrichtung umfasst, wobei die Kühlvorrichtung ausgeführt ist Schmier- oder Kühlmittel durch die Öffnung auf die Verzahnung beider Stirnräder aufzubringen.

Ein wesentlicher Teil der Reibungsenergie und thermischen Belastung des Stirnradgetriebes entsteht im Eingriff der Stirnräder. Eine direkte Kühlung der Zahnradoberflächen nach dem Eingriff ist daher besonders vorteilhaft. So können die Stirnräder effektiv auch in dem Innengehäuse gekühlt werden. Durch das Innengehäuse werden Strömungsreibung bereits reduziert, dennoch ist eine Kühlung der Zahnradoberflächen der Stirnräder vorteilhaft. Ein Aufbringen von Schnier- oder Kühlmittel direkt auf die Zahnradoberflächen der Stirnräder ermöglicht eine effektive Kontakt-Kühlung.

Besonders vorteilhaft ist das Abstreifen von Luft, Schmier- und/oder Kühlmittel vor dem Zahneingriff, da so die Reibung im Bereich des Eingriffs der Stirnräder reduziert wird. Durch den kämmenden Eingriff der Stirnräder entsteht in dem Bereich vor dem Eingriff ein Überdruck, da mitgeführte Luft und/oder mitgeführtes Schmier- oder Kühlmittel im Eingriff durch die Verzahnung gepresst wird, und so die Reibung erhöht.

Weiterhin vorteilhaft ist ein Stirnradgetriebe, wobei die Kühlvorrichtung zumindest zwei Reihen von Auftragsdüsen umfasst, die ausgeführt sind, Schmier- oder Kühlmittel tangential in den Ausgriff der Stirnräder sowie auf die Zahnradoberfläche des ersten Stirnrades und des zweiten Stirnrades aufbringen.

Ein flächiger Auftrag von Schmier- oder Kühlmittel über die Breite der Zahnräder erfolgt vorteilhaft über eine Mehrzahl von zumindest 3 Auftragsdüsen, die in einer Reihe angeordnet sind, und über eine gemeinsame Leitung mit Schmier- oder Kühlmittel versorgt werden. Die Auftragsdüsen können als Bohrungen ausgeführt sein, oder als Düsenbauteil in die Kühlmittelvorrichtung eingeschraubt werden. Ein Auftrag in tangentialer Richtung den Bereich des Eingriffs, in dem sich die Stirnräder wieder öffnen, hier Ausgriff genannt, ist besonders effektiv, da hier aufgrund der dynamischen Luftströmung bereits ein Unterdruck entsteht, und das Schmier- oder Kühlmittel besonders gut an die Zahnradoberflächen gelangt.

Weiterhin vorteilhaft ist ein Stirnradgetriebe wobei die Abstreifvorrichtung auf der den Stirnrädern und/oder dem Eingriff zugewandten Seite zumindest eine Auftragsdüse umfasst, geeignet Schmier- oder Kühlmittel auf die Stirnräder im Bereich des Eingriffs aufzubringen.

Zur Schmierung und/oder zur zusätzlichen Kühlung der Zahnradoberflächen der Stirnräder ist es vorteilhaft, wenn frisches (bzw. gekühltes) Schmier- oder Kühlmittel direkt vor dem Eingriff mittels einer Düse direkt auf die Zahnradoberflächen aufgetragen wird.

Weiterhin vorteilhaft ist ein Stirnradgetriebe, wobei in Drehrichtung nach dem Eingriff eine Kühlvorrichtung angeordnet ist, wobei die Kühlvorrichtung zumindest zwei Auftragsdüsen umfasst, wobei die Kühlvorrichtung ausgeführt ist Schmier- oder Kühlmittel auf beide Stirnräder aufzubringen.

Vorteilhaft ist der Auftrag von Schmier- oder Kühlmittel besonders in Drehrichtung nach dem Eingriff der Zahnradradoberflächen, da auf dieser Seite das Schmier- oder Kühlmittel direkt den Teil der Zahnradoberfläche erreichen, der in Kontakt und/oder im Eingriff mit der jeweils anderen Zahnradoberfläche ist. Dieser Teil der Zahnradoberfläche wird auch als Lastflanke bezeichnet. Ein Auftragen von Schmier-oder Kühlmittel auf die Lastflanke kann sowohl einen gleichmäßigen Schmierfilm ausbilden als auch eine besonders effektive Kühlung ermöglichen, da die Lastflanken durch den direkten Kontakt eine hohe Temperatur aufweisen.

Weiterhin vorteilhaft ist ein Stirnradgetriebe wobei die Abstreifvorrichtung und/oder die Kühlvorrichtung zumindest zwei weitere Flachstrahldüsen umfasst, ausgeführt Schmier- oder Kühlmittel in den Zwischenraum zwischen Innengehäuse und Stirnrad einzubringen, insbesondere in den Bereich der Zahnradflanken.

Auch wenn der Spalt zwischen Stirnrad und Innengehäuse im Bereich der Zahnradflanken gering ist, kann mittels Flachstrahldüsen direkt in diesen Zwischenraum Schmier- oder Kühlmittel eingebracht werden. Die Temperatur, die durch Reibung im Eingriff entsteht, kann auch über die Zahnradflanken und/oder die Seiten der Stirnräder, auf denen keine Zahnradoberflächen ausgebildet sind, mittels Kühlmittel abgeführt werden. Ein flächiger Auftrag von Kühlmittel mittels einer Flachstrahldüse ist dabei besonders vorteilhaft, da ein effizienter Wärmeübergang von dem Stirnrad an das Kühlmittel über den Flächigen Kontakt sichergestellt ist. Als Schmier- oder Kühlmittel wird meist ein mineralisches oder synthetisches Öl verwendet, dass beide Aufgaben, also das Schmieren und das Kühlen der Stirnräder erfüllt. Eine Kühlung ist erforderlich da bei großen übertragenen Lasten, und/oder hohen Drehzahlen, die Stirnräder auf schnell eine erhöhte Temperatur erreichen. Als erhöhte Temperaturen gelten dabei Temperaturen oberhalb von 100° C insbesondere oberhalb 120° C und im Besonderen Temperaturen an der Oberfläche der Zahnräder in einem Bereich von 120° - 300° C. Bei den erhöhten Temperaturen kann es durch thermische Ausdehnung und reduziertem Spiel in dem Eingriff und somit zu erhöhtem Verschleiß an den Zahnradoberflächen kommen. Die Kühlung kann prinzipiell über Konvektion und oder Wärmeleitung erfolgen, wobei sich Wärmeleitung von den Stirnrädern an das Schmier- oder Kühlmittel als besonders effektiv erwiesen hat.

Weiterhin vorteilhaft ist ein Stirnradgetriebe, wobei an zumindest einer weiteren Öffnung in dem Innengehäuse eine weitere Abstreifvorrichtung angeordnet ist, ausgeführt Schmier- oder Kühlmittel vor Eintritt in den Ringspalt, aus dem Innengehäuse auszuleiten.

Um die Reibung zwischen Innengehäuse und Stirnrädern zu minimieren, kann es Vorteilhaft sein einen Teil des mitgeführten Schmier- oder Kühlmittels zusammen mit der mitgeführten Luft aus dem Ringspalt auszuleiten. Dabei ist stets eine optimaler Betriebspunkt zwischen effektiver Kühlung und geringer Reibung abzuwägen. Es hat sich daher gezeigt, dass je nach Auslegung des Stirnradgetriebes eine weitere Öffnung im Innengehäuse mit einer Abstreifvorrichtung hier vorteilhaft ist. Die Abstreifvorrichtungen können vorteilhaft auch als Klinge ausgebildet sein.

Weiterhin vorteilhaft ist ein Stirnradgetriebe, wobei das Innengehäuse zumindest eine weitere Öffnung aufweist, die in Drehrichtung nach der Kühlvorrichtung angeordnet ist, wobei die Öffnung zumindest die Breite der Stirnräder aufweist und wobei die Öffnung in einem Winkel α in Laufrichtung 30° - 270° nach dem Eingriff angeordnet ist.

Die Abstreifvorrichtung kann dabei vorteilhaft tangential in Laufrichtung der Stirnräder angeordnet sein, da an den Zahnradoberflächen anhaftendes oder mitgeführtes Schmier- oder Kühlmittel der Massenträgheit folgend tangential abgeschleudert wird. So wird die Reibung im Ringspalt zwischen Stirnrad und Innengehäuse weiter reduziert, und der Wirkungsgrad des Stirnradgetriebes gesteigert. Damit das Schmier-oder Kühlmittel ausreichend Verweilzeit für einen effektiven Wärmeübergang hat, sollte die weitere Öffnung zumindest in einem Winkel α größer 30° nach dem Eingriff angeordnet sein. Besonders vorteilhaft ist ein Winkel α von 45° bis 180° da hier ein guter Kompromiss zwischen effektiver Kühlwirkung und reduzierter Reibung bzw. verbesserter Strömungsführung des Schmier- oder Kühlmittels erreicht werden kann.

Weiterhin vorteilhaft ist ein Stirnradgetriebe umfassend ein äußeres Getriebegehäuse, wobei die Zumindest eine Abstreifvorrichtung an dem äußeren Getriebegehäuse befestigt ist und wobei die Abstreifvorrichtung zu den Zahnradoberflächen einen Abstand zwischen 1 mm - 10 mm aufweist.

Bei hohen Drehzahlen und großen übertragenen Drehmomenten erreichen die Schmier- oder Kühlmittel große Strömungsgeschwindigkeiten. So werden an einer Abstreifvorrichtungen große Belastungen durch den Kontakt zu Schmier- oder Kühlmittel und mitgeführter Luft erreicht. Gleichzeitig ist eine präzise Ausrichtung der Abstreifvorrichtung in der Nähe der Zahnradoberflächen wichtig, um eine effektive Abstreifwirkung zu erreichen und mitgeführtes Schmier- oder Kühlmittel und mitgeführte Luft effektiv abzustreifen. Dabei ist es besonders vorteilhaft die Abstreifvorrichtung an einem stabilen Außengehäuse zu justierbar zu montieren. So können auch Vibrationen an der Abstreifvorrichtung vermindert werden. Weiterhin ist eine vorteilhafte, sichere Montage der Abstreifvorrichtung in einem Abstand von 1 mm - 10 mm, insbesondere in einem Abstand von 2 mm - 7 mm möglich, wodurch eine vorteilhafte besonders effektive Abstreifwirkung erreicht wird. Die Montage kann dabei über ein Einschrauben oder mittels einer Justiervorrichtung beispielsweise auch umfassend einige Zwischenstücke erfolgen.

Weiterhin vorteilhaft ist ein Stirnradgetriebe umfassend erstes Stirnrad und ein zweites Stirnrad wobei die beiden Stirnräder über eine Doppelschrägverzahnung miteinander im Eingriff stehen und wobei zwischen den Doppelschrägverzahnungen ein Abstand in Umfangsrichtung der Stirnräder ausgebildet ist, wobei die Abstreifvorrichtung einen Mittelsteg umfasst, der ausgeführt ist in den Abstand in Umfangsrichtung einzugreifen, wobei die Abstreifvorrichtung ausgeführt ist Schmier- oder Kühlmittel auch aus dem Bereich zwischen den Verzahnungen abzuführen.

Der Abstand zwischen den Verzahnungen einer Doppelschrägverzahnung kann im Eingriff eine größere Menge Schmier und Kühlmittel durchlassen, was besonders nachteilig ist, wenn in Drehrichtung nach dem Eingriff eine Kühlvorrichtung gekühltes Schmier- oder Kühlmittel in entgegengesetzter Strömungsrichtung aufträgt. Es ist daher besonders vorteilhaft, wenn die Abstreifvorrichtung einen Mittelsteg umfasst, der die Abstreifwirkung in Drehrichtung vor dem Eingriff auch in der Lücke zwischen den Doppelschrägverzahnungen erreicht.

Weiterhin vorteilhaft ist ein Stirnradgetriebe, wobei das Innengehäuse zumindest 270° der Umfangsfläche und der Stirnflächen beider Stirnräder umschließt. Die Stirnflächen sind die Flächen die sich vom Umfang bis zu Achse, Welle oder Lager der Stirnräder erstrecken. Eine Umschließung von 270° entspricht dabei einer Umschließung des Innengehäuses von zumindest 75 %. Dabei kann auch der Raum zwischen den Stirnrädern von dem Innengehäuse umschlossen sein, wobei hier die Form des Innengehäuses nicht der Form der Stirnräder folgen muss. Dass Innengehäuse umfasst also beide Stirnräder gemeinsam, wobei zumindest 75 % der freien Oberfläche der Stirnräder umschlossen ist. Die Öffnungen im Innengehäuse öffnen in Summe nur maximal 25 % des Innengehäuses.

Weiterhin vorteilhaft ist ein Stirnradgetriebe wobei der Ringspalt zwischen den Stirnradzahnoberflächen und dem Innengehäuse eine Ausmessung in Radialer Richtung von 2 mm - 25 mm aufweist.

Das Innengehäuse umschließt die Mantelfläche beider Stirnräder vorteilhaft in einem Abstand von 2 mm - 25 mm. Besonders vorteilhaft ist der Ringspalt in einem Bereich von 5 mm - 15 mm ausgeführt, da hier die strömungsführende Wirkung besonders vorteilhaft und reibungsarm ist. Das Innengehäuse umschließt nicht nur die Mantelfläche der Stirnräder, sondern auch einen wesentlichen Teil der Seitenflächen, sowie den Bereich der Stirnflächen und optional und vorteilhaft auch den Bereich der Stirnflächen bis zu dem Lager, der Welle oder dem Lagerblock. Weiterhin umschließt das Innengehäuse vorteilhaft und optional auch den Bereich zwischen beiden Stirnrädern, wobei in diesem Bereich auch Öffnungen angeordnet sein können. Das Innengehäuse kann dabei mehrteilig, oder aus einer Vielzahl an Segmenten aufgebaut sein, und wird an dem Lagerblock und/oder einem äußeren Gehäuse befestigt. Eine stabile Befestigung des Innengehäuses kann auch vorteilhaft mittels weiterer Einbauten oder Konsolen erfolgen.

Zwischen Innengehäuse und Getriebegehäuse sind vorteilhaft auch Führungen oder Leitungen für das Schmier- oder Kühlmittel angeordnet. Weiterhin umfasst das Getriebegehäuse vorteilhaft in seinem unteren Bereich vorteilhaft einen Ölsumpf und/oder eine Sammelstelle für Schmier- oder Kühlmittel, der mit einer Schmier- oder Kühlmittelkühlung verbunden ist.

Im Folgenden wird die Erfindung anhand von Figuren erläutert. Die Figuren zeigen im Einzelnen:
- Fig.1:: Darstellung Stirnradgetriebe mit Kühlvorrichtung
- Fig.2:: Schematische Darstellung mit drei Öffnungen
- Fig.3:: Darstellung Stirnradgetriebe mit Doppelschrägverzahnung
- Fig.4:: Darstellung Stirnradgetriebe mit Abstreifvorrichtung

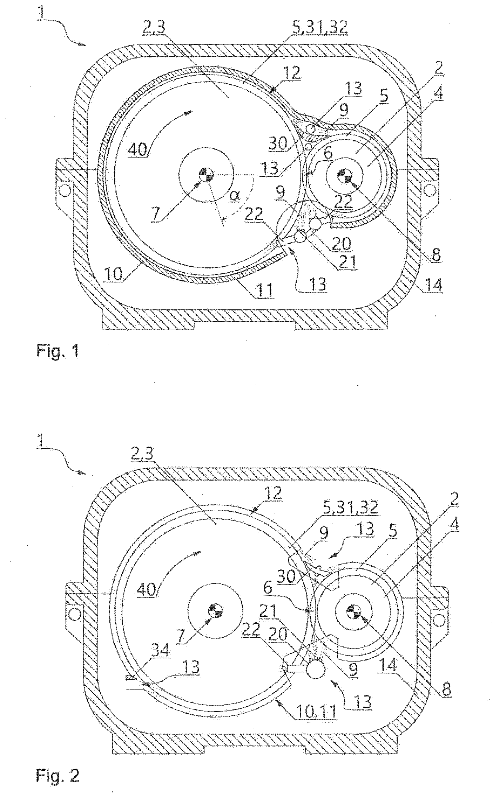

**Figur 1** zeigt eine nicht maßstäbliche schematische Teilschnittdarstellung eines Stirnradgetriebes 1 mit einer Kühlvorrichtung 20 und einer Abstreifvorrichtung 30. Das Stirnradgetriebe 1 umfasst zwei Stirnräder 2, die als erstes Stirnrad 3 und als zweites Stirnrad 4 dargestellt sind. Die Stirnräder 2 stehen miteinander in Eingriff 6, wobei eine über die erste Drehachse 7 eingebrachtes Drehmoment über das erste Stirnrad 3 über den Eingriff 6 an das zweite Stirnrad 4 und damit auf die zweite Drehachse 8 übertragen wird, oder umgekehrt. Die Drehrichtung 40 ist mittels eines Pfeiles beim ersten Stirnrad 3 in Urzeigersinn dargestellt, wobei das zweite Stirnrad 4, damit gegen den Urzeigersinn dreht, auch hier ist eine Umgekehrte Anordnung möglich. In dem Bereich, der in Drehrichtung 40 nach dem Eingriff 6 kommt, ist eine Kühlvorrichtung 20 angeordnet, die Ausgeführt ist Schmier- oder Kühlmittel 9 auf die Zahnradoberflächen 31 der Stirnräder 2 aufzubringen. Die Kühlvorrichtung 20 umfasst dabei zumindest vier Reihen von Auftragsdüsen 21, die über die Breite der Zahnradoberflächen 31 auf beide Stirnräder 2 Schmier- oder Kühlmittel 9 auftragen. Weiterhin umfasst die Kühlvorrichtung 20 zumindest vier Flachstrahldüsen 22, die ausgeführt sind beidseitig in den Spalt zwischen Zahnradflanken 32 und Innengehäuse 10 Schmier- oder Kühlmittel 9 einzubringen. Das Innengehäuse 10 ist im Bereich der Öffnung 13 leicht in tangentialer Richtung der Stirnräder 2 aufgeweitet, sodass ausreichend Schmier- oder Kühlflüssigkeit 9 in den Ringspalt 12 eintreten kann. Das Stirnradgetriebe 1 umfasst eine Abstreifvorrichtung 30, die ausgeführt ist Schmier- und Kühlmittel 9, dass im Ringspalt 12 mitgeführt wird über zumindest eine weitere Öffnung 13 aus dem Innengehäuse abzuführen. Im Bereich nach der Abstreifvorrichtung befindet sich zudem eine weitere Öffnung 13, um den Druck im Bereich vor dem Eingriff 6 weiter abzubauen, und auch angestaute Luft und/oder Schmier- und Kühlflüssigkeits- 9 Nebel oder Reste aus dem Innengehäuse 10 abzuführen. So können Turbulenzen und die damit verbundene Reibung im Bereich des Eingriffs 6 deutlich reduziert werden.

**Figur 2** zeigt eine schematische Darstellung eines Stirnradgetriebes 1, wobei das Innengehäuse 10, drei Öffnungen 13 umfasst, durch die eine Zu- und Ableitung von Schmier-oder Kühlmittel 9 erfolgt. Die Öffnungen 13 erlauben so eine effektive Kühlung der Stirnräder 2, wobei insbesondere die Zahnradoberflächen 31 und Zahnradflanken 32 durch eine Benetzung von Schmier- und Kühlmittel 9 gekühlt werden. In der Öffnung 13, die in Drehrichtung 40 unmittelbar nach dem Eingriff 6 der Stirnräder 2 angeordnet ist, wird Schmier- und Kühlmittel 9 mittels einer Kühlvorrichtung 20 eingebracht. Dabei ist es besonders vorteilhaft Schmier- und Kühlmittel 9 in Drehrichtung 40 nach dem Eingriff 6 einzubringen, da hier eine Unterdruckzone durch das Auseinanderbewegen der Stirnräder entsteht. Die Kühlvorrichtung 20 umfasst eine Mehrzahl von Auftragsdüsen 21, die Ausgeführt sind Schmier- und Kühlmittel 9 auf die Zahnradoberflächen 31 aufzubringen. Weiterhin umfasst die Kühlvorrichtung 20 eine optionale Flachstrahldüse 22, die ausgeführt ist Schmier- und Kühlmittel 9 auf die Zahnradflanken 32, also in den Spalt zwischen Stirnrad 2 und Innengehäuse 10 einzubringen. Das Schmier- und Kühlmittel 9 wird dabei im Betrieb des Stirnradgetriebes durch Fliehkräfte (Zentrifugalkräfte) in Richtung Ringspalt 12 transportiert, wobei eine Kühlwirkung durch Energieübertragung von dem Stirnrad 2 an das Schmier- und Kühlmittel 9 erfolgt. In Drehrichtung 40 folgt eine weitere Öffnung 13 die ausgeführt ist, Schmier- und Kühlmittel 9 aus dem Ringspalt 12 und somit aus dem Innengehäuse 10 abzuführen. Diese weitere Öffnung 13 ist vorteilhaft 45° - 180 ° in Drehrichtung 40 nach der ersten Öffnung angeordnet, eine derartige weitere Öffnung kann auch nicht bildlich dargestellt an dem zweiten Stirnrad 4 angeordnet werden. Diese weitere Öffnung 13 umfasst eine Abstreifklinge 34, um die in dem Ringspalt verbleibende Menge and Schmier- und Kühlmittel weiter zu reduzieren. Das Innengehäuse 10, das in dieser Figur nur als Linie schematisch dargestellt ist, umfasst weiterhin eine Öffnung 13 im Bereich oberhalb des Eingriffs 6 der beiden Stirnräder 2. In dieser Öffnung 13 ist eine optionale Abstreifvorrichtung 30 angeordnet, die ausgeführt ist Schmier- und Kühlmittel 9, dass in dem Ringspalt 12 mitgeführt wird, effektiv aus abzuleiten, sodass in dem Eingriff 6 der beiden Stirnräder 2 nur eine minimierte Menge and Schmier- und Kühlmittel 9 ankommt. Die Abstreifvorrichtung 30 kann dabei optional eine schematisch dargestellte Auftragsdüse 21 umfassen um gezielt etwas Schmier- und Kühlmittel 9 ein den Bereich des Eingriffs 6 auf die Zahnradoberflächen 31 aufzubringen.

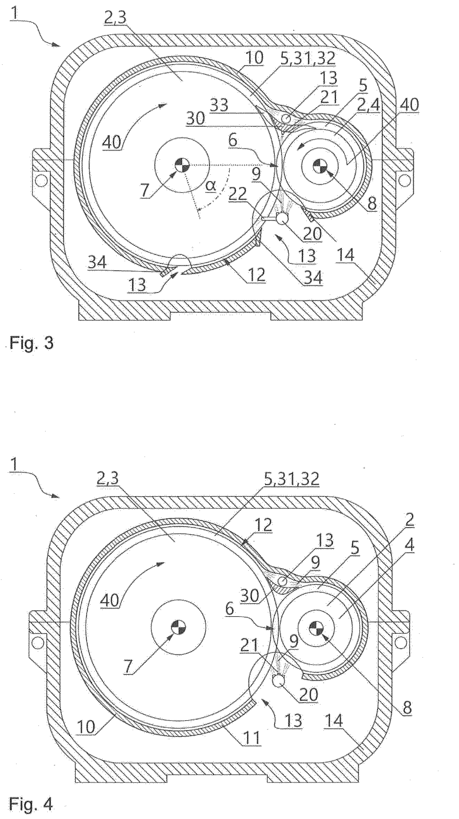

**Figur 3** zeigt eine nicht maßstäbliche schematische Teilschnittdarstellung eines Stirnradgetriebes 1 mit Kühlvorrichtung 10 und Abstreifvorrichtung 30, wobei das Getriebe Stirnräder 2 mit einer Doppelschrägverzahnung darstellt. Das Stirnradgetriebe 1 umfasst zwei Stirnräder 2, wobei die Stirnräder 2 mittels einer Verzahnung 5 kämmend ineinander eingreifen. Der Eingriff 6 erfolgt über die Verzahnung 5, die beispielsweise als in dieser Figur als Doppelschrägverzahnung ausgeführt ist. Die Stirnräder 2 umfassen ein erstes Stirnrad 3, das drehbar um eine erste Drehachse 7 angeordnet ist, und ein zweites Stirnrad 4, das drehbar um eine zweite Drehachse 8 angeordnet ist, wobei das erste Stirnrad 3 das zweite Stirnrad 4 antreibt, oder umgekehrt. Die Drehrichtung 40 der Stirnräder 2, 3, 4 ist durch Pfeile angezeigt. Die Stirnräder sind von weitgehend von zumindest einem Innengehäuse 10 umgeben, das eine Hüllwand 11 umfasst, die Ringförmig um die Stirnräder 2 angeordnet ist und die Stirnräder in engem Abstand weitgehend umschließt. In dem Bereich in Drehrichtung 40 vor dem Eingriff 6 befindet sich eine Abstreifvorrichtung 30, die geeignet ist im Ringspalt 12 mitgeführtes Schmier- und Kühlmittel 9 durch eine Öffnung 13 aus dem Innengehäuse 10 und aus dem Ringspalt 12 abzuführen. Die Abstreifvorrichtung 30 umfasst einen Mittelsteg 33, ausgeführt, um bei einer Doppelschrägverzahnung zwischen den Verzahnungen 5 ein effizientes Abstreifen zu erreichen. Der Mittelsteg 33 greift dabei in den radial ausgebildeten Zwischenraum, der zwischen den Verzahnungen 5 oder zwischen den Zahnradoberflächen 31 der Doppelschrägverzahnung ist.

**Figur 4****:** zeit eine nicht maßstäbliche schematische Teilschnittdarstellung eines Stirnradgetriebes 1, umfassend zwei ineinandergreifende Stirnräder 2,3,4 eine Abstreifvorrichtung 30 und einer Kühlvorrichtung 20. Die Kühlvorrichtung 20 umfasst eine Mehrzahl von Auftragsdüsen 21, die ausgeführt sind, Schmier- und Kühlmittel 9 auf die Oberfläche der Stirnräder 2 aufzubringen, wobei das Auftragen vorteilhaft in den Bereich des Eingriffs 6, insbesondere in den Ausgriff der Verzahnungen 5 erfolgt, da dort ein Unterdruck durch die Strömungsdynamik von Schmier- und Kühlmittel 9 und Umgebungsluft entsteht. Durch den Unterdruck kann so das Schmier- und Kühlmittel 9 besonders effektiv die Zahnradoberflächen 31 benetzen. Der Eingriff 6 ist dabei der Bereich, in dem die Verzahnung 5 der Stirnräder 2 in Berührung zueinandersteht. Die Seite, auf der die Zahnräder des Eingriffs 6 die in Drehrichtung 40 wieder auseinanderbewegt werden, wird auch Ausgriff genannt. Das Innengehäuse 10 umschließt auch die Zahnradflanken 32 bis hin zu den Wellen bzw. Lagern der Drehachsen 7,8. Oberhalb des Eingriffs wird Luft, Schmier- und/oder Kühlmittel 9 über die Abstreifvorrichtung 30 durch eine weitere Öffnung 13 aus dem Innengehäuse abgeführt. Auf diese Weise wird die Reibung durch Strömungen der Schmier- oder Kühlmittel 9 im Bereich vor dem Eingriff 6 und im Bereich des Eingriffs 6 selbst reduziert. So können die Reibungsverluste reduziert werden, wobei das Schmier- oder Kühlmittel 9 dennoch die Kühlfunktion durch eine ausreichende Kontaktzeit auf den Zahnradoberflächen 31 erreichen kann.

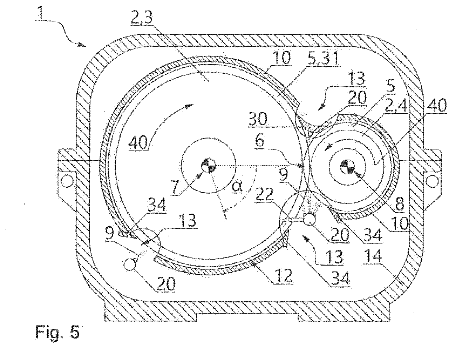

**Figur 5** zeigt eine schematische Darstellung eines Stirnradgetriebes 1, wobei das Innengehäuse 10, drei Öffnungen 13 umfasst, durch die jeweils Schmier- oder Kühlmittel 9 mittels einer Kühlvorrichtung auf die Zahnoberflächen 31 aufgetragen wird. So kann eine gleichmäßige Benetzung der Stirnräder 2,3,4 erreicht werden, die sich als besonders energiesparend erwiesen hat. Im Stand der Technik werden Stirnräder oft direkt durch einen Ölsumpf geführt, und nehme so eine größere Menge an Kühl- und/oder Schmiermittel 9 auf, so entstehen größere Energieverluste verglichen mit der in Figur 5 dargestellten Ausführung mit Innengehäuse. Die Öffnungen 13 sind am Eingriff 6 und Ausgriff 6 der Verzahnung 5 der Stirnräder angeordnet, weiterhin ist eine Öffnung 13 am Umfang des ersten Stirnrades 3 angeordnet. Die erfindungsgemäße Anordnung der Kühlvorrichtung 20 an dem Ausgriff 6 der Verzahnung ist besonders effektiv, da hier ein Unterdruck entsteht, durch die Geometrie der sich öffnenden Verzahnung 5. In den Versuchen zu dieser Erfindung hat es sich als besonders wirksam gezeigt an mehreren Stellen über den Umfang der Stirnräder weitere optionale Öffnungen vorzusehen, um erwärmtes Kühl- und/oder Schmiermittel 9 auszuleiten und frisches Kühl- und/oder Schmiermittel 9 einzubringen. Weitere nicht bildlich dargestellte Öffnungen 13 entlang des Umfangs der Stirnräder 2, 3, 4 können vorgesehen werden und sind teil dieses Ausführungsbeispiels. Die Öffnungen umfassen je eine eigene Kühlvorrichtung 20, sowie optional eine Abstreifvorrichtung 30 und/oder eine Abstreifklinge um zu verhindern, dass zu viel Öl mit dem Stirnrad 2 mitgeführt wird. In der Figur wird die Drehrichtung 40 derart angegeben, dass sie den Eingriff und Ausgriff der Verzahnung hintereinander definiert.

### Bezugszeichenliste

- 1: Stirnradgetriebe
- 2: Stirnrad
- 3: erstes Stirnrad
- 4: zweites Stirnrad
- 5: Verzahnung
- 6: Eingriff/Ausgriff
- 7: erste Drehachse
- 8: zweite Drehachse
- 9: Schmier- und/oder Kühlmittel

- 10: Innengehäuse
- 11: Hüllwand
- 12: Ringspalt
- 13: Öffnung
- 14: Getriebegehäuse

- 20: Kühlvorrichtung
- 21: Auftragsdüse
- 22: Flachstrahldüse

- 30: Abstreifvorrichtung
- 31: Zahnradoberflächen
- 32: Zahnradflanken
- 33: Mittelsteg
- 34: Abstreifklinge

- 40: Drehrichtung
- α: Winkel

## Patentansprüche

1. Stirnradgetriebe 1, umfassend zumindest zwei Stirnräder 2, die über eine Verzahnung 5 kämmend miteinander in Eingriff 6 stehen, umfassend zumindest ein Innengehäuse 10, dass mittels einer Hüllwand 11 zumindest einen Teil der Stirnräder 2 in Umfangsrichtung und in Richtung der Drehachsen 7,8 umschließt, wobei zwischen Innengehäuse 10 und den Stirnrädern 2 ein Ringspalt 12 ausgebildet wird **dadurch gekennzeichnet, dass** das Innengehäuse 10 in einem Bereich, in Rotationsrichtung 40 nach dem Eingriff 6, zumindest zwei Öffnungen 13 umfasst, wobei das Stirnradgetriebe 1 zumindest zwei Kühlvorrichtung 20 umfasst, wobei die Kühlvorrichtungen 20 ausgeführt sind Schmier- und/oder Kühlmittel 9 durch die Öffnungen 13 auf die Verzahnung 5 zumindest eines der Stirnräder 2 aufzubringen, wobei zumindest eine Kühlvorrichtung 20 ausgeführt ist Kühlmittel 9 in den Ausgriff 6 der Verzahnung 5 einzubringen.

2. das Innengehäuse 10 zumindest drei Öffnungen 13 umfasst, wobei durch die Öffnungen 13 ausgeführt sind einen Austausch von Schmier- und/oder Kühlmittel 9 zu ermöglichen.

3. Stirnradgetriebe 1 nach Anspruch 1 oder Anspruch 2, **dadurch gekennzeichnet, dass** die Kühlvorrichtung 20 zumindest zwei Reihen von Auftragsdüsen 21 umfasst, die ausgeführt sind Schmier- oder Kühlmittel 9 auf die Stirnräder aufzubringen.

4. Stirnradgetriebe 1 nach einem der vorherigen Ansprüche, **dadurch gekennzeichnet, dass** die Kühlvorrichtung 20 zumindest zwei weitere Flachstrahldüsen 23 umfasst, ausgeführt Schmier- oder Kühlmittel 9 in den Zwischenraum zwischen Innengehäuse 10 und Stirnrad 2 einzubringen, insbesondere in den Bereich der Zahnradflanken 32.

5. Stirnradgetriebe 1 nach einem der vorherigen Ansprüche, **dadurch gekennzeichnet, dass** die Abstreifvorrichtung 30 eine Mehrzahl von Auftragsdüsen 22 umfasst, derart angeordnet, dass Schmier- oder Kühlmittel 9 auf Zahnradoberflächen 31 beider Stirnräder 2 im Bereich des Eingriffs 6 aufgebracht wird.

6. Stirnradgetriebe 1 nach einem der vorherigen Ansprüche, **dadurch gekennzeichnet, dass** das Stirnradgetriebe 1 eine Abstreifvorrichtung 30 umfasst, wobei die Abstreifvorrichtung 30 in Rotationsrichtung 40 vor dem Eingriff 6 der Stirnräder 2 angeordnet ist, und ausgeführt ist Schmier- oder Kühlmittel 9 und Luft aus dem Ringspalt 11 aufzunehmen und aus dem Innengehäuse 10 durch die weitere Öffnung 13 abzuführen.

7. Stirnradgetriebe 1 nach einem der vorherigen Ansprüche, **dadurch gekennzeichnet, dass** an zumindest einer Öffnung 13 in dem Innengehäuse 10 eine Abstreifklinge 34 angeordnet ist, ausgeführt Schmier- oder Kühlmittel 9 vor Eintritt in den Ringspalt 12, aus dem Innengehäuse 10 auszuleiten.

8. Stirnradgetriebe 1 nach einem der vorherigen Ansprüche, **dadurch gekennzeichnet, dass** das Innengehäuse 10 zumindest eine weitere Öffnung 13 aufweist, die in Drehrichtung 40 nach der Kühlvorrichtung 20 angeordnet ist, wobei die Öffnung 13 zumindest die Breite Stirnräder 2 aufweist und wobei die Öffnung 13 in einem Winkel α in Laufrichtung 30° - 270° nach dem Eingriff angeordnet ist.

9. Stirnradgetriebe 1 nach einem der vorherigen Ansprüche umfassend ein äußeres Getriebegehäuse, **dadurch gekennzeichnet, dass** die Zumindest eine Abstreifvorrichtung an dem äußeren Getriebegehäuse befestigt ist, wobei die Abstreifvorrichtung zu den Stirnradzahnoberflächen einen Abstand zwischen 1 mm - 10 mm aufweist.

10. Stirnradgetriebe 1 nach einem der vorherigen Ansprüche umfassend erstes Stirnrad und ein zweites Stirnrad wobei die beiden Stirnräder über eine Doppelschrägverzahnung miteinander im Eingriff stehen und wobei zwischen den Doppelschrägverzahnungen Abstand in Umfangsrichtung der Stirnräder ausgebildet ist, **dadurch gekennzeichnet, dass** die Abstreifvorrichtung einen Mittelsteg umfasst, der ausgeführt ist in den Abstand in Umfangsrichtung einzugreifen, wobei die Abstreifvorrichtung ausgeführt ist Schmier- oder Kühlmittel auch aus dem Bereich zwischen den Verzahnungen abzuführen.

11. Stirnradgetriebe 1 nach einem der vorherigen Ansprüche, **dadurch gekennzeichnet, dass** das Innengehäuse zumindest 270° der Umfangsfläche und der Stirnflächen beider Stirnräder umschließt.

12. Stirnradgetriebe 1 nach einem der vorherigen Ansprüche, **dadurch gekennzeichnet, dass** der Ringspalt 12 zwischen den Stirnradzahnoberflächen und dem Innengehäuse eine Ausmessung in Radialer Richtung von 2 mm - 25 mm aufweist.
